# EUROPEAN PATENT APPLICATION

(11) **EP 4 811 847 A1**
(43) Date of publication of application: **23.09.2026**
(21) Application number: 26166718.2
(22) Date of filing: 23.03.2026
(51) Int. Cl.: H04W 16/14, H04W 28/086, H04W 28/08, H04W 72/543

(54) **TRAFFIC STEERING**

(30) Priority: 21.03.2025 GB 202504175
(71) Applicant: Parallel Wireless, Inc., Nashua, NH 03062 (US)
(72) Inventor: FAIRWEATHER, Kenneth James, Nashua, 03062 (US); PERSAUD, Marlon Peter, Nashua, 03062 (US)
(74) Representative: D Young & Co LLP

(57) **Abstract**

A computer-implemented method, performable by a scheduler manager, for steering traffic in a neutral host telecommunications network, the neutral host telecommunications network for supporting traffic from a plurality of mobile network operators , MNOs, with a plurality of access bands, the plurality of access bands comprising a shared access band for supporting traffic associated with the plurality of MNOs and one or more dedicated access bands for supporting traffic associated with respective MNOs, the method including: determining a traffic property associated with traffic of a first access band of the plurality of access bands; determining whether the traffic property satisfies a traffic steering condition; and in response to determining that the traffic property satisfies a traffic steering condition, steering the traffic of the first access band to a second access band of the plurality of access bands different from the first access band, wherein the scheduler manager is operable to schedule traffic of the first and second access band.

## Description

### Technical Field

The present disclosure relates to telecommunications networks and in particular to steering traffic in a neutral host (NH) telecommunications network, which supports traffic from multiple mobile network operators (MNOs) and/or private networks. More particularly, but not exclusively, described herein are techniques for steering traffic between access bands of an NH telecommunications network.

### Background

The use of NH telecommunication networks has been increasing in recent times. However, existing approaches to traffic steering are not suited to the complexities and considerations of NH telecommunication networks.

At least certain embodiments of the present disclosure address one or more of these problems as set out above.

### Summary

Aspects of the invention are set out in the accompanying claims.

Viewed from a first aspect, there is provided a computer-implemented method, performable by a scheduler manager, for steering traffic in a neutral host telecommunications network, the neutral host telecommunications network for supporting traffic from a plurality of mobile network operators, MNOs, with a plurality of access bands, the plurality of access bands comprising a shared access band for supporting traffic associated with the plurality of MNOs and one or more dedicated access bands for supporting traffic associated with respective MNOs, the method comprising: determining a traffic property associated with traffic of a first access band of the plurality of access bands; determining whether the traffic property satisfies a traffic steering condition; and in response to determining that the traffic property satisfies a traffic steering condition, steering the traffic of the first access band to a second access band of the plurality of access bands different from the first access band, wherein the scheduler manager is operable to schedule traffic of the first and second access band.

Hence, traffic in the NH network can be steered between access bands of the NH network when a property associated with network traffic satisfies a traffic steering condition. As a result, control of traffic steering, and thus traffic controllability, is increased. Further, spectrum resources can be more efficiently and controllably utilised by network traffic and shared between MNOs.

Indeed, such controllable steering of traffic to different access bands can be useful for various reasons. For example, the scheduler manager is able to balance load across the NH network, steer traffic based on priority, and enforce quality of service, as examples. Further, a utilisation of the second access band (the access band to which the traffic is steered) can be increased, thereby controllably increasing utilisation of a given access band in the NH network. Accordingly, the present techniques provide greater control of network traffic and thus of the NH telecommunications network.

As described herein, a neutral host telecommunications network may be a telecommunications network that is able to support traffic from multiple mobile network operators. In some examples, the neutral host telecommunications network comprises shared spectrum resources. It will be appreciated that an NH telecommunications network may not always support traffic from multiple MNOs at a given time, but that the NH telecommunications is nevertheless capable of doing so. In some examples, the NH telecommunications network is a 5G network and/or an Open RAN network.

An NH telecommunications network may support traffic with a plurality of access bands, including a shared access band and one or more dedicated access bands. An access band may correspond to a portion of the spectrum supported by the network. The shared access band may be configured to support traffic from a plurality of MNOs. The shared access band may be a portion of the spectrum shared between the plurality of MNOs. The one or more dedicated access bands may be configured to supporting traffic from a respective MNO. A dedicated access band may be an access band (i.e. portion of the spectrum) for which an MNO has permission or a licence to access/use. It will be appreciated that in some examples, as discussed further below, that a dedicated access band may nevertheless be shared with another MNO if that MNO is so permitted. For example, a first MNO that has licence to use a first dedicated access band (and thus the dedicated access band is for supporting traffic associated with the first MNO) may licence a second MNO to use the first dedicated access band.

In some examples, the method further comprises determining a further traffic property associated with traffic of the second access band, wherein determining whether the traffic property satisfies a traffic steering condition comprises determining whether the traffic property and the further traffic property satisfy the traffic steering condition, and wherein steering the traffic is responsive to determining that the traffic property and the further traffic property satisfy the traffic steering condition.

Hence, a more holistic network view may be used to steer traffic. This can reduce the likelihood that traffic is steered to a second access band when the second access band is not able to support the extra traffic, for example because the second access band is over-subscribed or being used to prioritise higher priority traffic.

In some examples, the traffic property comprises one or more of: a traffic demand associated with the traffic of the first access band; a traffic priority associated with the traffic of the first access band; and a quality of service indicator associated with the traffic of the first access band. Thus, the scheduler manager may steer traffic based on traffic demand, traffic priority and quality of service. As such, the flexibility and control of traffic steering increased.

By steering traffic based on traffic demand, overall utilisation of the network can be increased and traffic demand can be balanced between different access bands to reduce the likelihood that traffic is dropped by an access band experiencing excess demand. Further, in some examples, some traffic may be prioritised over other traffic. For example, traffic associated with emergency services may be prioritised over normal user traffic and thus the present approach is able to prioritise certain traffic by moving the traffic to a dedicated access band or an under-utilised access band, for example. The traffic may also be steered based on a quality of service indicator associated with traffic of the first access band. For example, when the indicator indicates that the quality of service is poor or below a pre-determined threshold, traffic may be steered to a different access band to increase the quality of service of the traffic.

As a result, a more flexible approach to traffic steering is provided. Indeed, the present techniques may be used for a variety of implementations to optimise for a given traffic property or networking goal, such as increasing link robustness, providing high priority traffic support, as examples.

In some examples, the traffic property comprises a traffic demand associated with the traffic of the first access band, and wherein determining whether the traffic property satisfies the traffic steering condition comprises: determining whether the traffic demand is greater than a capacity of the first access band. Hence, traffic may be steered to a second access band when a first access band is busy. Hence, under-utilised network resources (the second access band) can be shared to improve the link robustness of user devices associated with the traffic of the first access band.

It will be appreciated that rather than determining whether the traffic demand is greater than a capacity of the first access band, it may instead be determined whether the utilisation of the first access band is greater than a predetermined threshold.

Further, in some examples, rather than determining whether the traffic demand is greater than a capacity of the first access band to trigger the traffic steering, it may instead be determined whether the traffic demand of the first access band is less than a predetermined threshold. This can be used to save power associated with supporting the first access band, by moving traffic from an underutilised access band, to allow the first access band to be powered down.

In some examples, the method further comprises: determining a further traffic demand associated with traffic of a further access band of the plurality of access bands, the further access band associated with a further MNO, and determining whether the traffic property satisfies the traffic steering condition comprises determining whether the traffic demand associated with the traffic of the first access band is greater than the further traffic demand associated with the traffic of the further access band. Thus, the traffic may be steered from the first access band to the further access band when the demand for the first access band is greater than the second access band. Hence, the traffic associated with the most in demand access band is preferentially steered to a different band to alleviate the demand. This can reduce the likelihood that traffic is steered to an over-subscribed access band, or to a more over-subscribed access band.

In some examples, steering the traffic of the first access band to the second access band comprises biasing the traffic of the first access band to the second access band. The traffic may be biased by moving a user device connection from one band to another band. This may be performed using known 3GPP procedures. In some examples, the scheduler manager is configured to control a user device connection to move from one access band to another access band, for example by controlling a scheduler instance. Hence, the scheduler manager may directly or indirectly move or cause the moving of the user connection from one access band to another access band depending on implementation.

In some examples, steering the traffic of the first access band to the second access band is based on determining whether a traffic demand of the second access band is less than a bandwidth capacity of the second access band. Hence, traffic may be steered to the second access band only when the second access band is under-utilised. This reduces the likelihood that traffic is steered to an over-utilised access band and that traffic is dropped.

In some cases, combined traffic across the network may be greater than an available capacity, or there may be a particular prioritisation requirement (emergency service use, different type of network connection, different tier of customer groups, etc.). In cases such as this, the traffic may be steered based on priority.

Hence, in some examples, the traffic property comprises a traffic priority associated with the traffic of the first access band, and wherein determining whether the traffic property satisfies the traffic steering condition comprises: determining whether the traffic priority satisfies a priority condition. Hence, some traffic may be prioritised over other traffic based on a traffic priority. This reduces the likelihood that higher priority traffic is dropped, and increases the likelihood that higher priority traffic experiences suitable quality of service and link quality.

In some examples, the method further comprises: determining a further traffic priority associated with traffic of a further access band of the plurality of access bands, the further access band associated with a further MNO, and determining whether the traffic priority satisfies a priority condition comprises determining whether the traffic priority associated with the traffic of the first access band is greater than the further traffic priority associated with the traffic of the further access band.

As a result, in cases where multiple access bands have traffic of different priorities, the highest priority traffic can be prioritised and steered to the second access band. This can increase the link quality or network performance experienced by the higher priority traffic, reducing the likelihood that higher priority is dropped or adversely affected.

In some examples, the traffic property comprises a quality of service indicator associated with the traffic of the first access band, and wherein determining whether the traffic property satisfies the traffic steering condition comprises: determining whether the quality of service indicator satisfies a quality of service condition. Hence, traffic steering may be performed based on quality of service. For example, it may be determined when the quality of service indicator is below a predetermined threshold (e.g. the quality of service condition), the traffic is to be steered from the first access band to the second access band. This can increase the overall quality of experience of the traffic across the network.

In some examples, the method further comprises: determining a further quality of service indicator associated with traffic of a further access band of the plurality of access bands, the further access band associated with a further MNO, and determining whether the traffic condition satisfies a traffic steering condition comprises determining whether the quality of service indicator and further quality of service indicator associated with the traffic of the first access band and traffic of the second access band indicate that a quality of service associated with the traffic of the first access band is worse than a quality of service associated with traffic of the further access band. Hence, traffic can be steered to satisfy quality of service requirements. The likelihood that traffic is steered to another access band with a worse quality of experience for the traffic is reduced, thereby reducing the likelihood that the traffic will be dropped.

In some examples, the first access band is a dedicated access band associated with a first MNO. In some examples, the second access band is a dedicated access band associated with a second MNO. Hence, in some cases, traffic may be moved from an access band of a first MNO to an access band of a second MNO. This counter-intuitive traffic steering can be used to maximise or increase the utilisation of a given access band, and in some examples 'overrule' MNO agreements when a traffic property is being used to control traffic steering instead, such as traffic demand, traffic priority or quality of service.

In some examples, the traffic is associated with a private network. In some examples, the traffic is associated with a mobile virtual network operator, MVNO, hosted by an MNO associated with the first access band. In some examples, the traffic is associated with an MNO associated with the first access band. Hence, the present traffic steering techniques can be applied to various implementations.

In some examples, the second access band is the shared access band. Hence, in some examples, traffic associated with an MNO may be moved from a dedicated access band to the shared access band to satisfy various traffic property requirements. This can increase the utilisation of the shared access band, for example when the dedicated access band is over-utilised or traffic is to be prioritised. This also load-balances across the access bands, improving overall network performance.

In some examples, steering the traffic of the first access band to the second access band comprises selecting user device connections to steer based on a determined user device quality of connection property. In this way, user device connections can be selected for steering based on a quality of connection, for example those user device connections not satisfying a quality of connection property may preferentially be moved. This can increase the overall quality of connection for user devices in the network.

According to a second aspect, there is provided a scheduler manager for a neutral host telecommunications network comprising one or more processors configured to perform the method as described herein.

According to a third aspect, there is provided a computer-readable medium comprising instructions which, when executed by one or more processors, cause the one or more processors to perform the method as described herein.

According to a fourth aspect, there is provided a computer program product comprising instructions which, when the program is executed by one or more processors, cause the one or more processors to perform the method as described herein.

Other aspects will also become apparent upon review of the present disclosure, in particular upon review of the Brief Description of the Drawings, Detailed Description and Claims sections.

### Brief Description of the Drawings

Examples of the disclosure will now be described, by way of example only, with reference to the accompanying drawings in which:
Figure 1: schematically illustrates an example neutral host telecommunications network;
Figure 2A: illustrates steps for traffic steering according to the present techniques;
Figure 2B: illustrates steps for traffic steering according to the present techniques;
Figure 3: illustrates a traffic steering example for fully utilising the shared access band;
Figure 4: illustrates a traffic steering example for steering traffic to the shared access band based on priority;
Figure 5: illustrates a traffic steering example for sharing a dedicated access band with another MNO;
Figure 6: illustrates a traffic steering example for supporting private network traffic with a shared access band;
Figure 7: illustrates a traffic steering example for sharing a dedicated access band with an MVNO;
Figure 8: illustrates a traffic steering example for sharing an MNO's traffic between its own dedicated access band and a shared access band; and
Figure 9: schematically illustrates an example electronic device for implementing the present techniques.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### Detailed Description

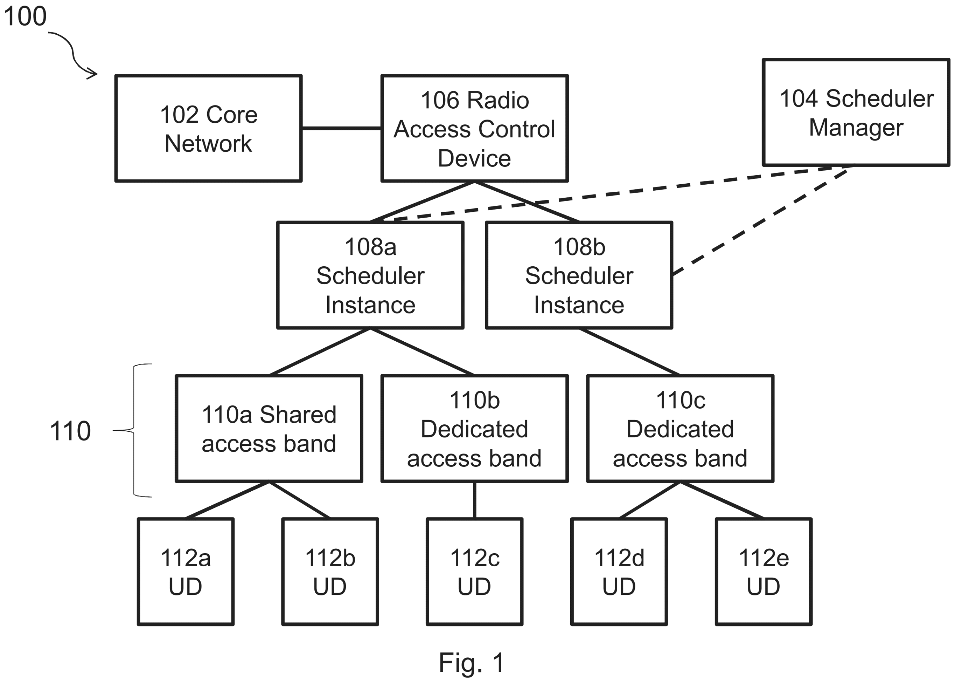

Figure 1 shows an example neutral host telecommunications network 100 in which teachings of the present disclosure can be implemented.

As shown in figure 1, telecommunications network 100 includes a core network 102, a scheduler manager 104, a radio access control device 106, scheduler instances 108a and 108b, a plurality of access bands (including shared access band 110a, dedicated access band 110b, and dedicated access band 110c), and user devices 112a, 112b, 112c, 112d, and 112e. Network connections between the various devices are shown by solid lines. It will be appreciated that figure 1 shows an example network and that in other examples various components may be included or omitted, and connections between components may be varied.

Indeed, it will be appreciated that each network connection depicted in figure 1 can represent a direct network link but also a network connection through a plurality of links through one or more intermediate devices or nodes. The core network 102 may provide connectivity to one or more other networks or other parts of the network 100. The dashed lines associated with the scheduler manager 104 represent logical paths between the scheduler manager 104 and the scheduler instances 108a, 108b by which the scheduler manager 104 can control the scheduling for the plurality of access bands 110 via the scheduler instances 108a, 108b (thereby controlling the user device 112 connections). However, in other examples, the scheduler manager 104 may control the access bands 110 directly.

The scheduler manager referred to herein may also be referred to as a mobility manager. It will be appreciated that scheduler manager 104 may be a single dedicated device located somewhere in the telecommunications network 100, combined with one or more of the other network devices, distributed across a plurality of dedicated/shared devices and/or be hosted in the cloud. The exact network path between the scheduler manager 104 and the scheduler instances 108a, 108b is omitted for clarity. It will be appreciated that the specific number and layout of devices is merely an example useful for illustrating a telecommunications network in which the teachings of the disclosure can be implemented.

It will be further appreciated that while the devices in figure 1 are shown as separate devices, in other examples one or more of these devices may be combined and/or co-located. For example, one or more scheduler instances and one or more radio devices may be combined into one device, thereby reducing latency and allowing for the sharing of hardware. In other examples, the one or more scheduler instances and one or more radio devices may be provided in separate devices or remote from each other, thereby allowing for disaggregation of functionally which can increase efficiency, e.g. by avoiding redundant capacity for higher-level functionality and for allowing virtualisation (for example of one or more scheduler instances). Similarly, the radio access control device can be provided in the same device as one or more scheduler instances or may be provided as a separate device.

The telecommunications network can comprise a radio access control device 106, the radio access control device being operable to manage access control for one or more devices in the telecommunication network. It will be appreciated that the radio access control device 106 can be present or omitted, and in some cases may be combined with the centralised controller 104. In some examples, the radio access control device comprises a Centralised Unit (CU). Thereby the radio access control device 106 can operate as part of a 5G network and/or as part of an Open RAN architecture. In some examples, the radio access control device can operate in accordance with one or more standards, for example from 3GPP, ITU, O-RAN ALLIANCE and/or Small Cell Forum. Thereby interoperability with other devices and networks can be ensured.

The scheduler instances 108 are operable to schedule networking operations of the access bands 110 to which they are connected. In particular, the scheduler instances 108 manage radio communication (e.g. frequencies, time slots, and/or transmission power) to one or more user devices 112 connected to the one or more access bands 110.

In some examples, a scheduler instance comprises a Distributed Unit (DU). Thereby the scheduler instances 108 can operate as part of a 5G network and/or as part of an Open RAN architecture. In some examples, the scheduler instance can operate in accordance with one or more standards, for example from 3GPP, ITU, O-RAN ALLIANCE and/or Small Cell Forum. Thus, interoperability with other devices and networks can be ensured.

In some examples, a scheduler instance may be associated with traffic of multiple access bands and thus may be considered a shared scheduler instance. In other examples, each access band is associated with a dedicated scheduler instance. The scheduler manager 104 is configured to steer traffic in the network between access bands (in some examples via controlling the scheduler instances, and in some examples directly). The present technique is not particularly limited in this respect.

Scheduler instances 108 may in some examples be virtualised in a virtualisation environment or provided in software and may thus be virtual machines or software, with the resource allocation of scheduler instances managed by a scheduler manager (such as a virtual machine manager or hypervisor or container manager). In some cases, the scheduler instances may be remote from the radio devices and connected thereto by a network connection. For example, the scheduler instances 108 may be provided in a cloud computing server or arrangement.

The neutral host telecommunications network 100 may include a plurality of radio devices (not shown) to handle radio frequency (RF) transmission and reception to user devices 112. In some cases, each radio device may comprise multiple radios, each radio able to provide a user device with connectivity to a certain frequency band. For example, each radio device may be able to provide connectivity via three or four or more different frequency bands. In some examples, each of the plurality of radio devices comprise one or more Radio Units (RU). Thereby the radio devices can operate as part of a 5G network and/or as part of an Open RAN architecture. In some examples, the radio device can operate in accordance with one or more standards, for example 3GPP, ITU, O-RAN ALLIANCE and/or Small Cell Forum. Thus, interoperability with other devices and networks can be ensured.

As discussed above, network 100 includes shared spectrum resources (e.g. a shared access band 110a), which are shared between a plurality of MNOs. In some examples, network 100 is a 5G network and/or an Open RAN network. In some examples, the network 100 operates in accordance with one or more standards, for example 3GPP, ITU, O-RAN ALLIANCE and/or Small Cell Forum.

Network 100 also includes dedicated access bands 110b, 110c. As described herein, an access band may also be referred to as a 'channel'.

The neutral host telecommunications network 100 is configured to support traffic from the plurality of MNOs with the plurality of access bands 110. The plurality of access bands 110 includes a shared access band 110a for supporting traffic associated with the plurality of MNOs. For example, traffic associated with a plurality of different MNOs may be supported by the shared access band 110a. The plurality of access bands 110 also includes one or more dedicated access bands 110b, 110c, for supporting traffic associated with respective MNOs.

The access bands 110 correspond to portions of spectrum supported by the network 100. A given portion of spectrum/dedicated access band may be allocated based on a given MNO licencing that portion of the spectrum. The shared access band 110a corresponds to a shared portion of the spectrum.

Thus, the shared access band 110a may support traffic from multiple MNOs, and each dedicated access band (110b, 110c) may support traffic associated with only a single MNO. For example, dedicated access band 110b may support traffic from MNO #1 and dedicated access band 110c may support traffic from MNO #2, and not vice versa. However, in some cases, dedicated access bands may be able to support traffic from MNOs other than the one they are configured to support. Thus, in some examples, a dedicated access band may refer to an access band intended to be used to support traffic from a particular MNO (while still being able to support traffic from other MNOs, for example if permission is given). In this way, a dedicated access band associated with an MNO may refer to the dedicated access band licensed for that MNO.

Hence, in the example of figure 1, traffic for UD 112a and UD 112b is supported by the shared access band 110a, traffic for UD 112c is supported by dedicated access band 110b and traffic for user devices 112d and 112e is supported by dedicated access band 110c.

The scheduler manager 104 controls traffic steering for the neutral host telecommunications network 10, and particularly for the plurality of access bands 110. For example, traffic can be steered by the scheduler manager 104 between different access bands using 3GPP procedures. In examples, each of the plurality of access bands 110 may be associated with a different scheduler instance. Thus, the scheduler manager 104 may steer traffic by controlling a first scheduler instance to initiate a 3GPP handover process to another scheduler instance associated with the second access band to which traffic is to be steered.

As discussed herein, the present techniques increase the control of traffic steering by steering traffic between access bands when a property associated with network traffic satisfies a traffic steering condition. This can be performed to controllably increase or decrease utilisation of a given access band, which can be used to balance load across the NH network, steer traffic based on priority, and enforce quality of service, as examples.

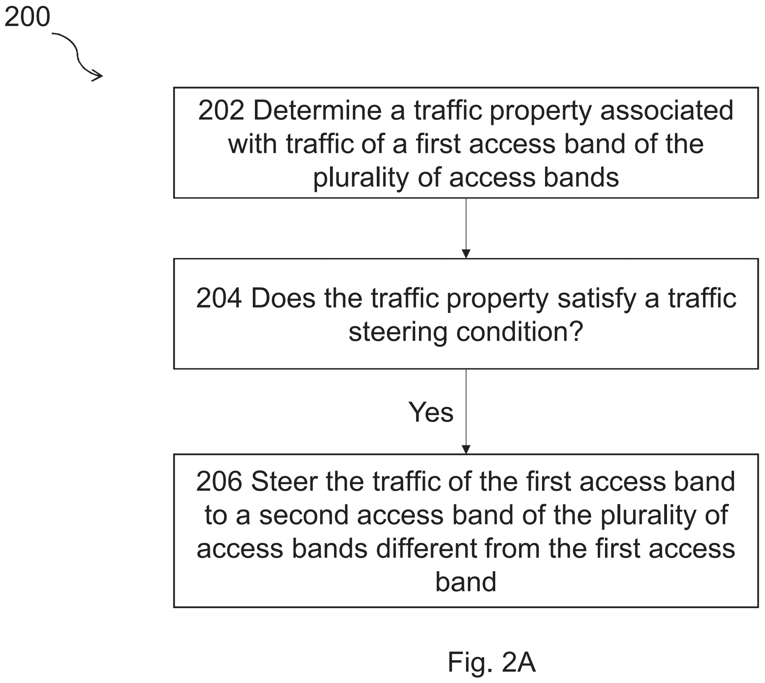

The present traffic steering techniques will now be discussed in more detail with reference to figure 2A.

Figure 2A shows a method 200 for steering traffic depending on the outcome of a traffic condition evaluation, according to the present techniques.

Step 202 includes determining a traffic property associated with traffic of a first access band of the plurality of access bands. For example, the traffic property may be associated with one of the plurality of access bands 110 of figure 1, such as shared access band 110a, dedicated access band 110b or dedicated access band 110c. In some examples, step 202 also includes determining a further traffic property associated with traffic of one or more other access bands (such as a second access band).

Step 202 may be performed periodically by the scheduler manager, for example at predetermined time intervals. Alternatively, step 202 may be performed in response to a control signal or user input. The present technique is not particularly limited in this respect.

The traffic property may comprise a traffic demand associated with the traffic of the first access band. For example, the traffic demand may be indicative of data demand per second of the traffic of the first access band. The traffic demand may indicate the demand for the first access band from the user devices connected to the first access band.

The traffic property may comprise a traffic priority associated with the traffic of the first access band. For example, some traffic may be specified as having a greater priority than other traffic, and this higher traffic priority may then be prioritised or preferentially steered depending on the scenario. The priority of traffic may be set based on the user device or use of the traffic (for emergency services for example) or may depend on a customer type or agreed service level.

The traffic property may comprise a quality of service indicator associated with the traffic of the first access band. For example, some traffic may be specified as having a greater quality of service requirement than other traffic, and/or a quality of service indicator (such as latency, jitter, etc.) may be monitored to determine whether user device links may be improved by steering their connections to another access band.

**The** traffic property may comprise one or more of the above, and in some cases one or more of a traffic demand, traffic priority, and quality of service indicator may be determined at step 202.

Step 204 includes determining whether the traffic property satisfies a traffic steering condition. In some examples, step 204 also includes determining whether the further traffic property (i.e. the traffic property associated with an access band other than the first access band) satisfies a further traffic steering condition (which may be the same or different from the traffic steering condition).

For example, when the traffic property comprises a traffic demand, step 204 may include determining whether the traffic demand is greater than a capacity of the first access band. The traffic steering condition may be satisfied when the traffic demand is greater than the capacity of the first access band. Hence, when a given access band is over-utilised, traffic steering may be initiated to reduce the utilisation of the access band and reduce or avoid dropped traffic.

When a traffic property has been determined for another access band other than the first access band, step 204 may also additionally or alternatively include determining whether the traffic demand associated with the traffic of the first access band is greater than the further traffic demand associated with the traffic of the further access band.

When the traffic property comprises a traffic priority, step 204 may include determining whether the traffic priority satisfies a priority condition. The priority condition may be satisfied when the traffic priority indicates a high priority. Hence, when traffic is considered high priority, traffic steering may be initiated to steer the high priority to another access band (which may be less utilised or provide an improved connection, for example).

When a traffic property has been determined for another access band other than the first access band, step 204 may also additionally or alternatively include determining whether the traffic priority associated with the traffic of the first access band is greater than the traffic priority associated with the traffic of the further access band.

When the traffic property comprises a quality of service indicator, step 204 may include determining whether the quality of service indicator satisfies a quality of service condition. For example, the quality of service condition may include whether the quality of service indicator is greater than a predetermined threshold, or whether the quality of service indicator corresponds to a predetermined value.

When a traffic property has been determined for another access band other than the first access band, step 204 may also additionally or alternatively include determining whether the quality of service indicator and further quality of service indicator associated with the traffic of the first access band and traffic of the second access band indicate that a quality of service associated with the traffic of the first access band is worse than a quality of service associated with traffic of the further access band.

Step 206 includes steering the traffic of the first access band to a second access band of the plurality of access bands different from the first access band. Step 206 is performed in response to determining that the traffic steering condition is satisfied in step 204.

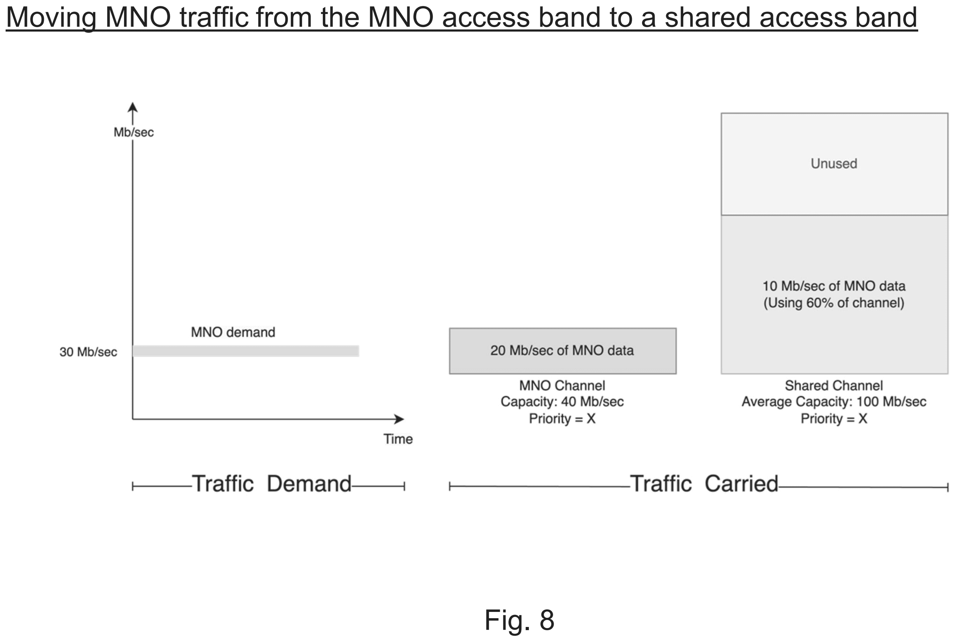

Steering the traffic of the first access band to the second access band may include biasing a scheduling of the traffic of the first access band to the second access band. This may be performed using pre-determined networking handover procedures, such as 3GPP for example. In some examples, steering the traffic of the first access band to the second access band comprises selecting user device connections to steer based on a determined user device quality of connection property. The quality of connection property may include properties indicative of a cell interference, a latency, a jitter, etc. This example is discussed in more detail with reference to figure 8.

The first access band of step 202 may refer to a shared access band or a dedicated access band. For example, step 202 may include determining a traffic property associated with traffic of a dedicated access band associated with a first MNO (for example, for which the first MNO has permission to use, and/or has a licence to use). Alternatively, step 202 may include determining a traffic property associated with traffic of a shared access band.

The second access band of step 206 may refer to a dedicated access band associated with a second MNO (different from the first access band of step 202). For example, step 206 may include steering the traffic of the first access band to a dedicated access band associated with a second MNO. Alternatively, step 206 may include steering traffic of the first access band to a shared access band.

Further, in some examples, the traffic of step 202 may be associated with a private network. Alternatively, the traffic may be associated with an MNO associated with the first access band (i.e. the traffic may be associated with the same MNO that is associated with the access band/has permission to use the first access band). In some cases, the traffic is associated with an MVNO associated with the first access band.

Hence, the present traffic steering techniques may be used with a variety of different access band and network implementations.

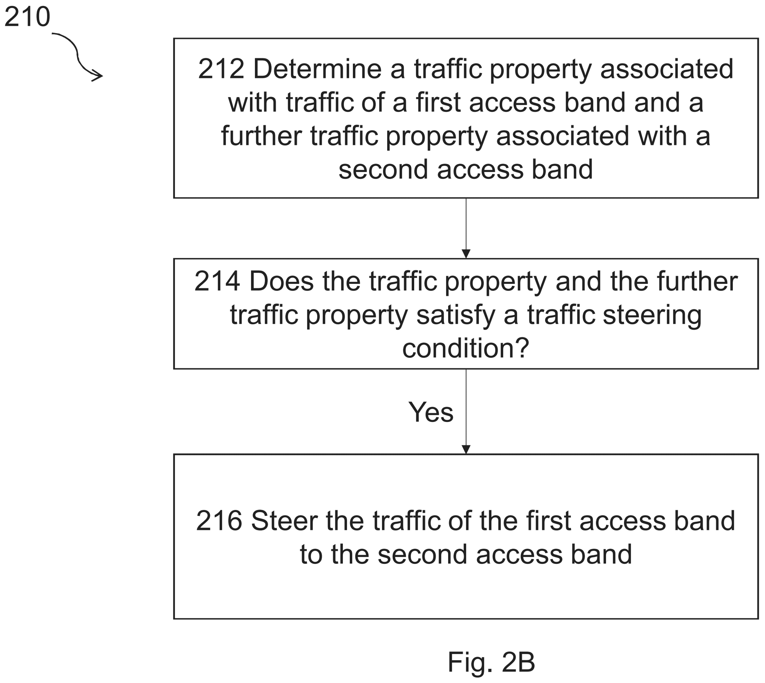

Figure 2B shows a method 210 for steering traffic depending on the outcome of a traffic condition evaluation for both a first access band and a second access band. Method 210 is similar to method 200 and discussion of method 200 applies similarly to method 210.

Step 212 includes determining a traffic property associated with traffic of a first access band and a further traffic property associated with a second access band. For example, a traffic demand, traffic priority and/or quality of service indicator associated with traffic of both the first and second access band may be determined.

Step 214 includes determining whether the traffic property and the further traffic property satisfy a traffic steering condition. For example, the traffic steering condition may include whether the traffic demand associated with the first access band is greater than a traffic demand of the second access band. When this is the case, the traffic steering condition may be satisfied. It may also be determined whether the second access band has capacity to support additional traffic. In other examples, the traffic steering condition may include whether the traffic priority associated with the first access band is greater than the traffic priority associated with traffic of the second access band. When this is the case, the traffic steering condition may be satisfied. In other examples, the traffic steering condition may include whether the quality of service indicator associated with the first access band is less than the quality of service indicator associated with traffic of the second access band. When this is the case, the traffic steering condition may be satisfied.

Step 216 includes steering the traffic of the first access band to the second access band in response to determining that the traffic steering condition is satisfied in step 214.

Hence, the present traffic steering techniques may consider traffic properties associated with a plurality of access bands and steer traffic based on this, resulting in a more holistic network view being used to steer traffic.

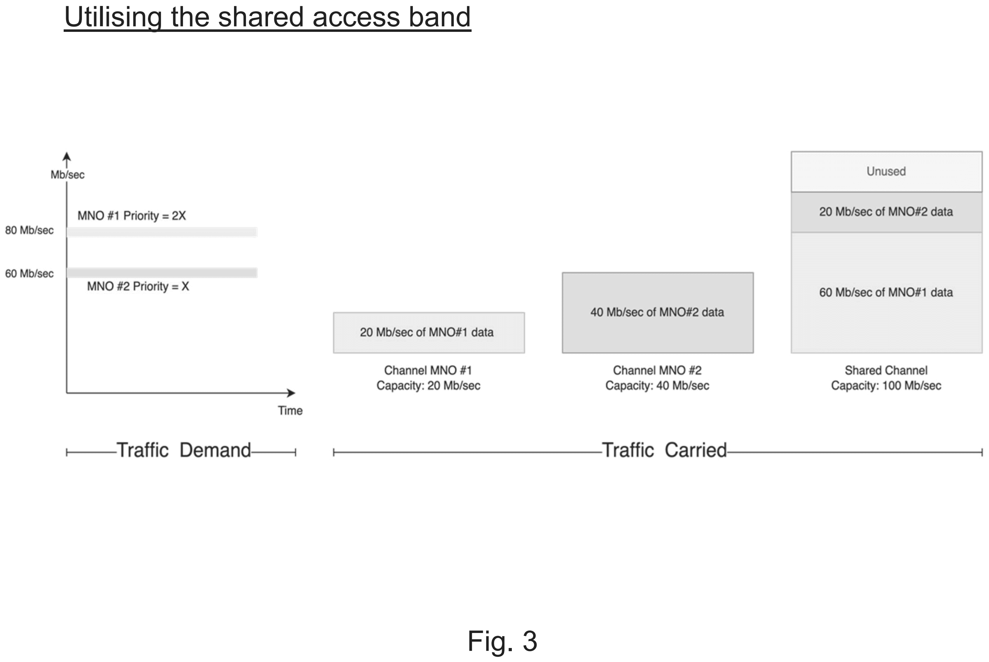

Examples of traffic steering scenarios will now be discussed with reference to figures 3 to 8, according to the present techniques. These examples use various configurations of first and second access bands (i.e. shared access bands or dedicated access bands). These examples may be performed in the neutral host telecommunications network described above, such as network 100 of figure 1.

Figure 3 shows an example of steering traffic to utilise the shared access band.

Hence, figure 3 shows an example of the neutral host telecommunications network supporting a shared access band (labelled 'shared channel') having a capacity of 100 Mb/sec, and two dedicated access bands (labelled 'Channel MNO #1' and 'Channel MNO #2'), having a capacity of 20 MB/sec and 40 Mb/sec respectively. As discussed herein, the shared channel is configured to support traffic from a plurality of MNOs, such as MNO #1 and MNO #2. Channel MNO #1 is configured to support traffic from MNO #1, and Channel MNO #2 is configured to support traffic from MNO #2. The traffic associated with each MNO is also associated with a priority (shown by 2X and X), which is discussed in examples further below).

As shown at the left hand side of figure 3, the traffic demand associated with MNO #1 is 80MB/sec and the traffic demand associated with MNO #2 is 60MB/sec. Hence, the traffic demand associated with MNO #1 is greater than the capacity of Channel MNO #1, and the traffic demand associated with MNO #2 is greater than the capacity of Channel MNO #2. However, the total capacity of the neutral host telecommunications network is 160 Mb/sec. That is to say, although the traffic cannot be supported by the dedicated access bands, the traffic can be supported by utilising the shared access band for some of the traffic associated with MNOs #1 and 2.

Thus, in this example, the scheduler manager determines a traffic demand (being an example of a traffic property) associated with one or more of the access bands. The scheduler manager then determines whether the traffic demand satisfies a traffic steering condition by determining whether the traffic demand associated with a dedicated access band (Channel MNO #1 and/or Channel MNO #2), is greater than a capacity of that dedicated access band. The scheduler manager may perform a similar determination for the other dedicated access band.

In the example of figure 3, as the demand is greater than the capacity of each of the two Channels, the scheduler manager can direct use of the unused portion of the shared channel and thus steers traffic from Channel MNO #1 to the shared channel, and also from Channel MNO #2 to the shared channel. Hence, 60 Mb/sec of traffic associated with MNO #1 is steered to the shared access band and 20 Mb/sec of traffic associated with MNO #2 is steered to the shared channel. As shown in figure 3, the shared channel still has 20 Mb/sec of capacity remaining after the traffic is steered.

As discussed herein, the scheduler manager can steer traffic by using/directing scheduler instances associated with the relevant access bands to use 3GPP procedures.

In examples, the scheduler manager selects a lower order modulation coding scheme for selected user devices connected to the higher priority MNO #1 to increase their link robustness. The selected user devices may be selected based on the user devices having: re-transmission rates above a predetermined threshold, channel quality indicator variation above a predetermined threshold, high priority traffic (e.g. traffic associated with emergency services).

As a result of steering the traffic to the under-utilised shared access band, all of the traffic demand can be supported.

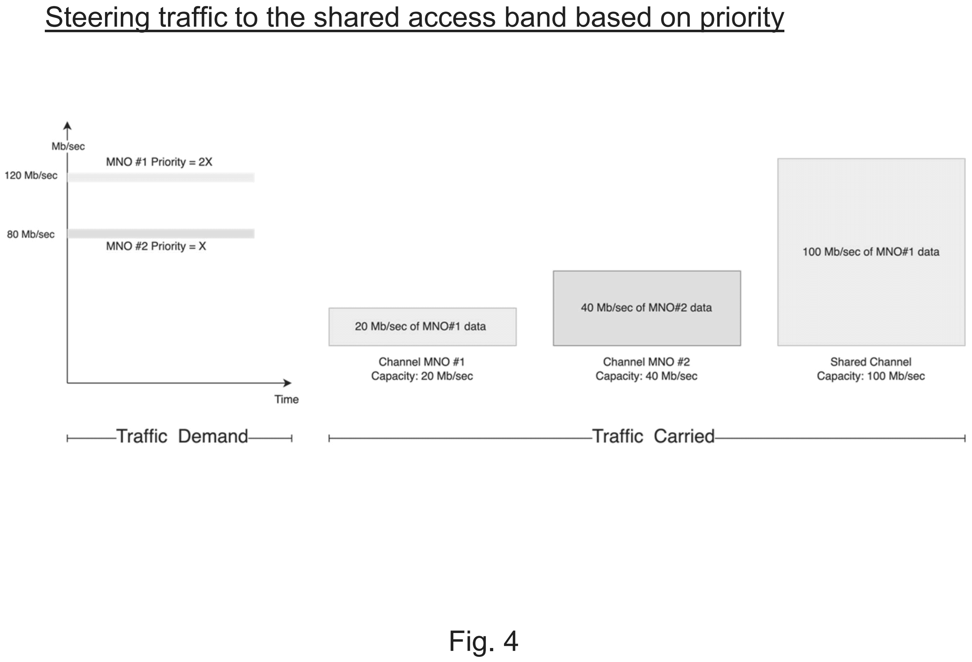

Figure 4 shows an example of steering traffic to the shared access band based on traffic priority. In this example, the combined traffic demand (for all of the MNO traffic) is greater than a total capacity of the access bands (the traffic demand is 200 Mb/sec and the traffic capacity is 160 Mb/sec).

As shown, MNO #1 priority is double MNO #2 (2X versus X). In this scenario, the scheduler manger determines the traffic priority and preferentially uses the shared channel to carry MNO#1 traffic. This can be implemented in the scheduler manager by using existing telecommunications protocols (such as mobile telephony protocols) to bias shared channel scheduling towards the traffic associated with MNO #1 (i.e. the higher priority traffic).

Thus, in this example, the shared channel is entirely utilised by the traffic associated with MNO #1. As a result, all of the high priority MNO #1 traffic can be supported by the network, whereas 40MB/sec of the lower priority MNO #2 traffic is dropped.

In this way, the shared channel can be utilised based on traffic priority.

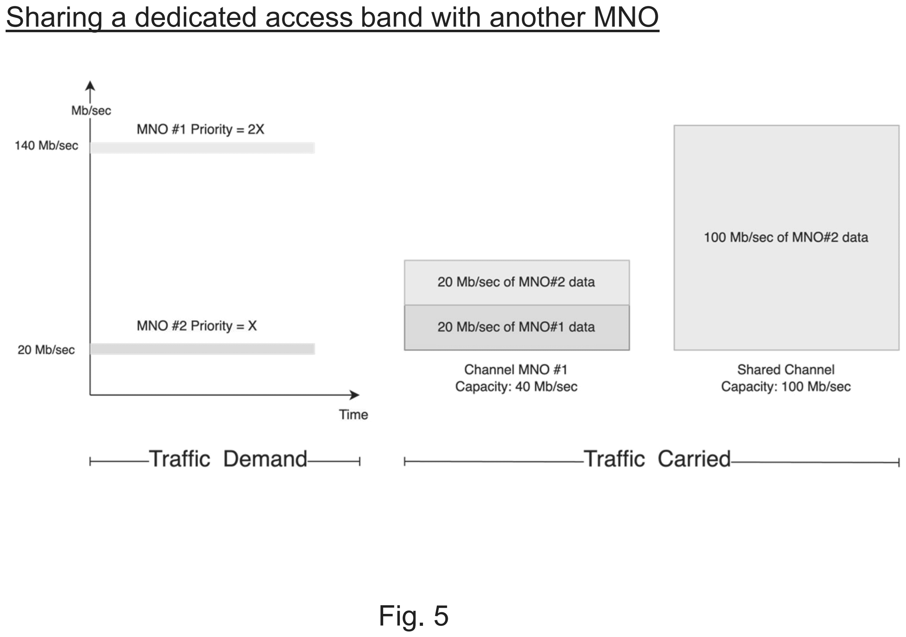

Figure 5 shows an example of sharing a dedicated access band. Previous examples have shown a dedicated access band being used to exclusively carry traffic for that MNO. However, in some examples, a dedicated access band associated with a given MNO may support traffic from another MNO. This sharing could be to support high priority traffic, for example.

Hence, as shown in figure 5, MNO #1 is under-utilised and MNO #2 has high demand. Thus, MNO #1 allows a portion of its spectrum to be used by a third-party (e.g. a user device on a different MNO or a high-priority connection from a private network). In this example, MNO #1 allows a portion of channel MNO #1 to be used by MNO #2.

As a result, an MNO licensed band may be shared with a third-party (such as another MNO, or a private network).

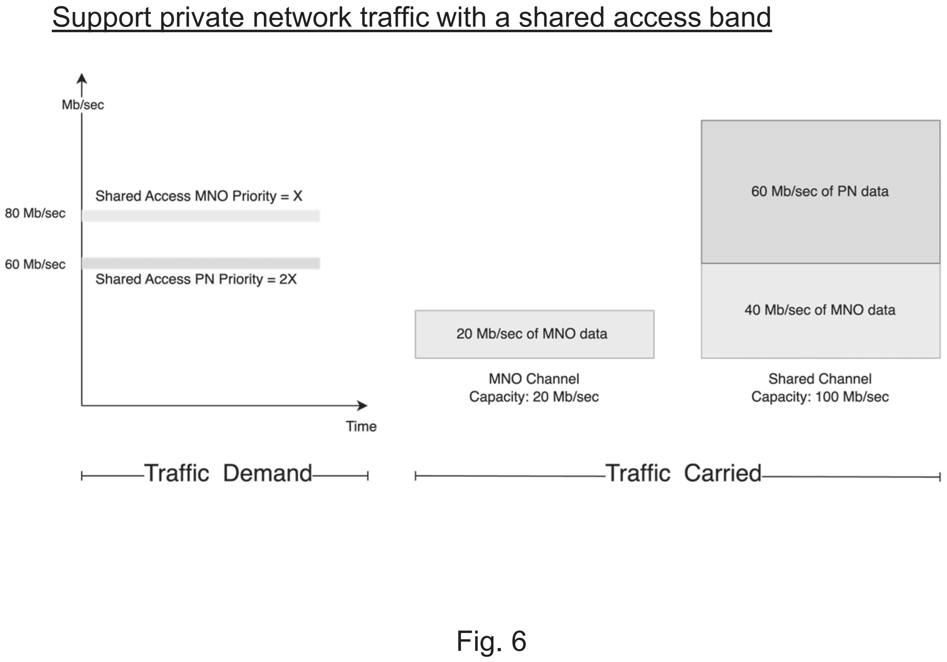

Figure 6 shows an example of supporting private network traffic with the shared access band.

In some implementations, a scheduler manager may only have access to the shared channel and may not have an MNO dedicated access band anchor. An example of this would be a neutral host supporting MNO and private networks from the same radio location.

In the example of figure 6, the private network (labelled PN) does not have an anchor licensed access band and has a higher priority than the shared access MNO traffic. Hence, the traffic associated with the PN is prioritised on the shared channel. This may result in MNO traffic demand not being satisfied.

Hence, all of the traffic demand (60 Mb/sec) associated with the PN is supported by the shared channel, and the remainder of the shared channel is used to support 40 Mb/sec of the shared access MNO traffic.

As a result, the shared channel can be used to satisfy priority requirements for traffic associated with a private network.

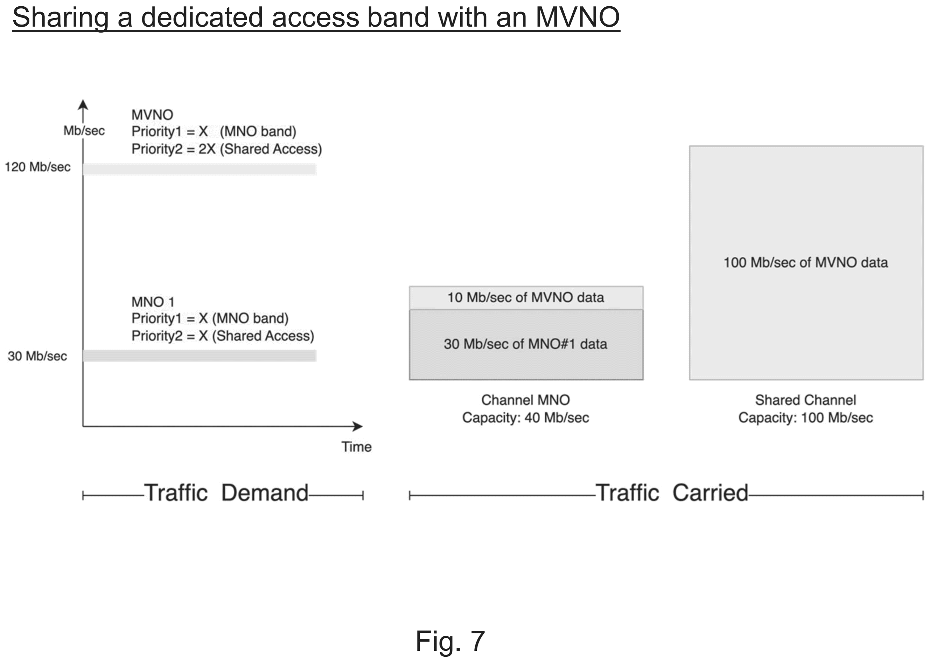

Figure 7 shows an example of sharing a dedicated access band with a virtual MNO (MVNO).

In this example, MNO #1 shares its dedicated access band (labelled 'Channel MNO') with a second MNO, where the second MNO is a virtual MNO hosted by MNO #1. In this example the MVNO has a higher priority for using the shared access band than the MNO host band (i.e. a 2-way agreement between NH vendor and MVNO or a 3-way agreement between the MNO, MVNO and NH vendor), the total traffic demand is greater than available capacity, and priority adherence is maximized by scheduling the whole of shared access band to MVNO.

The use of a common scheduler manager (for all of the access bands) also increases scheduling fairness. For example, MNO#1 is allowed to carry its total demand requirement in the MNO band, regardless of MNO/MVNO access priority agreement, and MNO#1 gains from MVNO's use of the shared access band. Scheduling Fairness criteria may be used in combination with band priorities to satisfy other requirements, like user experience (i.e. 30 Mb/sec MNO is a 50% increase on the 20 Mb/sec suggested by strict adherence to equal priority in the MNO band, whereas reducing MVNO capacity from 120 to 110 Mb/sec results in a smaller impact of approximately a <10% reduction).

As a result, the shared access band is able to preferentially carry MVNO traffic. This supports an implementation where additional agreements with the MVNO beyond the MNO/MVNO agreement are present, and the MNO benefits from preferential offloading of MVNO demand to a shared channel.

Figure 8 shows an example of moving an MNO's traffic from its own access band to the shared access band.

There are cases where it may be useful for the MNO to prioritise individual traffic streams of its own traffic, for example because that traffic is higher priority or associated with a particular quality of service agreement. For example, some traffic may be associated with emergency services, or a particular customer type. Figure 8 shows a scenario where a user device with low received power is offloaded to the shared access band, to utilize the larger available bandwidth for higher total throughput, despite the poorer quality of the link (as it is then supported by the shared channel).

Thus, as shown in figure 8, 10 Mb/sec of the 30 Mb/sec of total MNO demand is moved to the shared channel, while the remaining 20 Mb/sec of MNO demand is supported by the MNO channel. In this example, the priority of the MNO traffic is the same, but in other examples, the higher priority portion of the MNO traffic may be moved to the shared channel, or the lower priority portion may be moved to the shared channel, depending on implementation.

Steering individual user device connections between access bands provides further benefits. For example, moving user device connections to the shared access band from the MNO channel (i.e. dedicated access band): reduces cell interference for the case where the neutral host small cell is within the footprint of a macro cell using the same spectrum resource (user devices using the shared channel avoid generating in-band interference); and frees up capacity in the MNO licensed band. For example, moving user device connections to the MNO band from the shared channel: when the MNO band is a significantly lower frequency than the shared channel and the user device is in a poor coverage location (indoors or in an urban canyon, for example) this can increase link quality; shared channel is heavily contended with multiple networks and so for latency sensitive connections, moving to the MNO band may reduce jitter and network latency; and for periods of low radio utilization, traffic steering can be used to apply power optimisations to the shared access radio (i.e. reduce power when not in use).

Hence, the scheduler manager can direct user device connections between dedicated and shared access bands to optimise individual connections.

It will be appreciated that the examples described above may be variously combined.

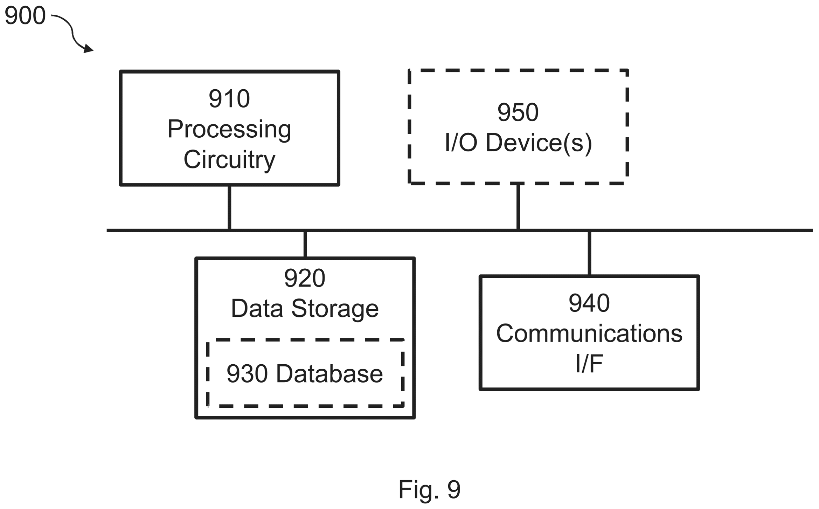

Figure 9 schematically illustrates an example of an electronic device 900 which can be used to implement teachings described above, including method 200 and 250, and the example traffic steering scenarios described with reference to figures 3 to 8.

The electronic device 900 has processing circuitry 910 for performing data processing in response to program instructions and data storage 920 for storing data and instructions to be processed by the processing circuitry 910. In some examples, the processing circuitry 910 includes one or more caches for caching recent data or instructions. The data storage 920 may have a database 930 which can, for example, store cluster information and/or utilisation information. The device further includes a communication interface 940 which can be used, for example, to obtain/receive traffic properties associated with traffic of access bands and information relating to the steering of traffic in the network. It will be appreciated that Figure 9 is merely an example of possible hardware that may be provided in the device and other components may also be provided. The device 900 may additionally or alternatively be provided with one or more user input/output device(s) 950 to receive input from a user device (e.g. to trigger the traffic property determination) or to output information (e.g. control information to control scheduler instances to steer traffic).

The methods discussed above may be performed under control of a computer program executing on a device. Hence a computer program may comprise instructions for controlling a device to perform any of the methods discussed above. **The** program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

### CLAUSES

1. A computer-implemented method, performable by a scheduler manager, for steering traffic in a neutral host telecommunications network, the neutral host telecommunications network for supporting traffic from a plurality of mobile network operators, MNOs, with a plurality of access bands, the plurality of access bands comprising a shared access band for supporting traffic associated with the plurality of MNOs and one or more dedicated access bands for supporting traffic associated with respective MNOs, the method comprising:
   determining a traffic property associated with traffic of a first access band of the plurality of access bands;
   determining whether the traffic property satisfies a traffic steering condition; and
   in response to determining that the traffic property satisfies a traffic steering condition, steering the traffic of the first access band to a second access band of the plurality of access bands different from the first access band, wherein the scheduler manager is operable to schedule traffic of the first and second access band.
2. The method of clause 1, further comprising determining a further traffic property associated with traffic of the second access band, wherein determining whether the traffic property satisfies a traffic steering condition comprises determining whether the traffic property and the further traffic property satisfy the traffic steering condition, and wherein steering the traffic is responsive to determining that the traffic property and the further traffic property satisfy the traffic steering condition.
3. The method of any preceding clause, wherein the traffic property comprises one or more of: a traffic demand associated with the traffic of the first access band; a traffic priority associated with the traffic of the first access band; and a quality of service indicator associated with the traffic of the first access band.
4. The method of any preceding clause, wherein the traffic property comprises a traffic demand associated with the traffic of the first access band, and wherein determining whether the traffic property satisfies the traffic steering condition comprises:
   determining whether the traffic demand is greater than a capacity of the first access band.
5. The method of any of clauses 3 or 4, wherein the method further comprises:
   determining a further traffic demand associated with traffic of a further access band of the plurality of access bands, the further access band associated with a further MNO, and determining whether the traffic property satisfies the traffic steering condition comprises determining whether the traffic demand associated with the traffic of the first access band is greater than the further traffic demand associated with the traffic of the further access band.
6. The method of any preceding clause, wherein steering the traffic of the first access band to the second access band comprises biasing traffic of the first access band to the second access band.
7. The method of any preceding clause, wherein steering the traffic of the first access band to the second access band is based on determining whether a traffic demand of the second access band is less than a bandwidth capacity of the second access band.
8. The method of any preceding clause, wherein the traffic property comprises a traffic priority associated with the traffic of the first access band, and wherein determining whether the traffic property satisfies the traffic steering condition comprises:
   determining whether the traffic priority satisfies a priority condition.
9. The method of clause 8, wherein the method further comprises:
   determining a further traffic priority associated with traffic of a further access band of the plurality of access bands, the further access band associated with a further MNO, and determining whether the traffic priority satisfies a priority condition comprises determining whether the traffic priority associated with the traffic of the first access band is greater than the further traffic priority associated with the traffic of the further access band.
10. The method of any preceding clause, wherein the traffic property comprises a quality of service indicator associated with the traffic of the first access band, and wherein determining whether the traffic property satisfies the traffic steering condition comprises:
   determining whether the quality of service indicator satisfies a quality of service condition.
11. The method of clause 10, wherein the method further comprises:
   determining a further quality of service indicator associated with traffic of a further access band of the plurality of access bands, the further access band associated with a further MNO, and determining whether the traffic condition satisfies a traffic steering condition comprises determining whether the quality of service indicator and further quality of service indicator associated with the traffic of the first access band and traffic of the second access band indicate that a quality of service associated with the traffic of the first access band is worse than a quality of service associated with traffic of the further access band.
12. The method of any preceding clause, wherein the first access band is a dedicated access band associated with a first MNO.
13. The method of any preceding clause, wherein the second access band is a dedicated access band associated with a second MNO.
14. The method of any of clauses 1 to 12, wherein the second access band is the shared access band.
15. The method of clause 14, wherein the traffic is associated with a private network.
16. The method of clause 14, wherein the traffic is associated with a mobile virtual network operator, MVNO, hosted by an MNO associated with the first access band.
17. The method of clause 14, wherein the traffic is associated with an MNO associated with the first access band.
18. The method of any preceding clause, wherein steering the traffic of the first access band to the second access band comprises selecting user device connections to steer based on a determined user device quality of connection property.
19. A scheduler manager for a neutral host telecommunications network comprising one or more processors configured to perform the method of any of clauses 1 to 18.
20. A computer-readable medium comprising instructions which, when executed by one or more processors, cause the one or more processors to perform the method of any of clauses 1 to 18.
21. A computer program product comprising instructions which, when the program is executed by one or more processors, cause the one or more processors to perform the method of any of clauses 1 to 18.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

## Claims

1. A computer-implemented method, performable by a scheduler manager, for steering traffic in a neutral host telecommunications network, the neutral host telecommunications network for supporting traffic from a plurality of mobile network operators, MNOs, with a plurality of access bands, the plurality of access bands comprising a shared access band for supporting traffic associated with the plurality of MNOs and one or more dedicated access bands for supporting traffic associated with respective MNOs, the method comprising:
determining a traffic property associated with traffic of a first access band of the plurality of access bands;
determining whether the traffic property satisfies a traffic steering condition; and
in response to determining that the traffic property satisfies a traffic steering condition, steering the traffic of the first access band to a second access band of the plurality of access bands different from the first access band, wherein the scheduler manager is operable to schedule traffic of the first and second access band.

2. The method of claim 1, further comprising determining a further traffic property associated with traffic of the second access band, wherein determining whether the traffic property satisfies a traffic steering condition comprises determining whether the traffic property and the further traffic property satisfy the traffic steering condition, and wherein steering the traffic is responsive to determining that the traffic property and the further traffic property satisfy the traffic steering condition.

3. The method of any preceding claim, wherein the traffic property comprises one or more of: a traffic demand associated with the traffic of the first access band; a traffic priority associated with the traffic of the first access band; and a quality of service indicator associated with the traffic of the first access band.

4. The method of any preceding claim, wherein the traffic property comprises a traffic demand associated with the traffic of the first access band, and wherein determining whether the traffic property satisfies the traffic steering condition comprises:
determining whether the traffic demand is greater than a capacity of the first access band.

5. The method of any of claims 3 or 4, wherein the method further comprises:
determining a further traffic demand associated with traffic of a further access band of the plurality of access bands, the further access band associated with a further MNO, and determining whether the traffic property satisfies the traffic steering condition comprises determining whether the traffic demand associated with the traffic of the first access band is greater than the further traffic demand associated with the traffic of the further access band.

6. The method of any preceding claim, wherein steering the traffic of the first access band to the second access band comprises biasing traffic of the first access band to the second access band, and/or wherein steering the traffic of the first access band to the second access band is based on determining whether a traffic demand of the second access band is less than a bandwidth capacity of the second access band.

7. The method of any preceding claim, wherein the traffic property comprises a traffic priority associated with the traffic of the first access band, and wherein determining whether the traffic property satisfies the traffic steering condition comprises:
determining whether the traffic priority satisfies a priority condition, and optionally wherein the method further comprises:
determining a further traffic priority associated with traffic of a further access band of the plurality of access bands, the further access band associated with a further MNO, and determining whether the traffic priority satisfies a priority condition comprises determining whether the traffic priority associated with the traffic of the first access band is greater than the further traffic priority associated with the traffic of the further access band.

8. The method of any preceding claim, wherein the traffic property comprises a quality of service indicator associated with the traffic of the first access band, and wherein determining whether the traffic property satisfies the traffic steering condition comprises:
determining whether the quality of service indicator satisfies a quality of service condition, and optionally wherein the method further comprises:
determining a further quality of service indicator associated with traffic of a further access band of the plurality of access bands, the further access band associated with a further MNO, and determining whether the traffic condition satisfies a traffic steering condition comprises determining whether the quality of service indicator and further quality of service indicator associated with the traffic of the first access band and traffic of the second access band indicate that a quality of service associated with the traffic of the first access band is worse than a quality of service associated with traffic of the further access band.

9. The method of any preceding claim, wherein the first access band is a dedicated access band associated with a first MNO.

10. The method of any preceding claim, wherein the second access band is a dedicated access band associated with a second MNO.

11. The method of any of claims 1 to 9, wherein the second access band is the shared access band, and optionally:
wherein the traffic is associated with a private network, or wherein the traffic is associated with a mobile virtual network operator, MVNO, hosted by an MNO associated with the first access band, or wherein the traffic is associated with an MNO associated with the first access band.

12. The method of any preceding claim, wherein steering the traffic of the first access band to the second access band comprises selecting user device connections to steer based on a determined user device quality of connection property.

13. A scheduler manager for a neutral host telecommunications network comprising one or more processors configured to perform the method of any of claims 1 to 12.

14. A computer-readable medium comprising instructions which, when executed by one or more processors, cause the one or more processors to perform the method of any of claims 1 to 12.

15. A computer program product comprising instructions which, when the program is executed by one or more processors, cause the one or more processors to perform the method of any of claims 1 to 12.
